# EUROPÄISCHE PATENTSCHRIFT

(11) **EP 2 861 453 B1**
(45) Veröffentlichungstag und Bekanntmachung des Hinweises auf die Patenterteilung: **08.08.2018**
(21) Anmeldenummer: 13729021.9
(22) Anmeldetag: 13.06.2013
(51) Int. Cl.: B60N 2/00, B60N 2/80

(54) **KOPFSTÜTZE UND VERFAHREN ZUM BETRIEB EINER KOPFSTÜTZE**
HEADREST AND A METHOD FOR DRIVING OF A HEADREST
APPUIE-TETE ET PROCÉDÉS POUR LE FAIRE FONCTIONNER

(30) Priorität: 15.06.2012 DE 102012105234; 22.08.2012 DE 102012016567
(43) Veröffentlichungstag der Anmeldung: 22.04.2015
(73) Patentinhaber: Adient Luxembourg Holding S.à r.l., 1855 Luxembourg (LU)
(72) Erfinder: DILLINGER, Thomas, 40880 Ratingen (DE); LANGE-MAO, Wei, 58135 Hagen (DE)
(74) Vertreter: Loock, Jan Pieter
(86) Internationale Anmeldenummer: PCT/EP2013/062271
(87) Internationale Veröffentlichungsnummer: WO 2013/186310

(56) Entgegenhaltungen:
- DE-A1- 19 547 333
- DE-A1-102006 023 584

## Beschreibung

### Stand der Technik

Die vorliegende Erfindung geht aus von einer Kopfstütze für Kraftfahrzeugsitze. Derartige Kopfstützen sind allgemein bekannt und dienen zum Abstützen des Kopfes eines auf dem Kraftfahrzeugsitz sitzenden Fahrzeuginsassen. Für die Sicherheit des Fahrzeuginsassen ist eine korrekte Positionierung der Kopfstütze wichtig. Dies gilt insbesondere für die richtige Höhe der Kopfstütze in Relation zum Fahrzeuginsassen, wodurch das Verletzungsrisiko im Innern eines einen Heckaufprall erleidenden Fahrzeugs, beispielsweise aufgrund eines Auffahrunfalls, erheblich reduziert werden kann. Zur Einstellung der richtigen Kopfstützenposition sind die Kopfstützen daher häufig höhenverstellbar ausgebildet.

Die Erfahrung zeigt, dass trotz der Höhenverstellbarkeit der Kopfstützen in vielen Fahrzeugen die Kopfstützen nicht in der optimalen Position angeordnet sind und so-Die DE102006023584A zeigt eine gattungsgemässe Kopfstütze.

### Offenbarung der Erfindung

Es ist daher eine Aufgabe der vorliegenden Erfindung, eine Kopfstütze zur Verfügung zu stellen, welche eine Einstellung der richtigen Kopfstützenposition in Bezug auf einen Sitzinsassen begünstigt und welche vergleichsweise einfach und kostengünstig herstellbar ist.

Gelöst wird diese Aufgabe durch eine Kopfstütze gemäss dem Anspruch 1. Erfindungsgemäss wird mittels des optischen Sensors eine Information erzeugt, in welcher Position sich die Kopfstütze relativ zum Kopf des Insassen befindet. Diese Information wird vorzugsweise mit Referenzdaten verglichen, um zu bestimmen, ob sich die Kopfstütze in einer korrekten Position befindet oder ob die Position der Kopfstütze optimiert werden kann. Denkbar ist, dass wenn eine verbesserungswürdige Position der Kopfstütze detektiert wird, ein Warnhinweis zur Benachrichtigung des Insassen erzeugt wird und/oder die Kopfstütze automatisch in die richtige Position, beispielsweise mittels eines Motors, verfahren wird. Die Verwendung eines optischen Sensors hat ferner den Vorteil, dass eine vergleichsweise einfache und kostengünstige Implementierung ermöglicht wird. Im Gegensatz zu mechanischen Sensoren treten bei der Verwendung der erfindungsgemäßen Kopfstütze ferner keine Verschleißerscheinungen am Sensor auf, so dass in vorteilhafter Weise die Langlebigkeit erhöht und die Fehleranfälligkeit der Kopfstütze erheblich gesenkt werden kann.

Vorteilhafte Ausgestaltungen und Weiterbildungen der Erfindung sind den Unteransprüchen sowie der Beschreibung unter Bezugnahme auf die Zeichnungen entnehmbar.

Gemäß einer nicht beanspruchten Ausführungsform ist vorgesehen, dass der Sensor zur Lokalisierung eines Kontaktpunktes des Kopfes des Insassen auf einer Kopfanlagefläche der Kopfstütze vorgesehen ist. Die Position des Kontaktpunkts erlaubt sodann einen Rückschluss auf die Relativposition zwischen dem Kopf und der Kopfstütze.

Gemäß der Erfindung ist vorgesehen, dass die Kopfstütze ein Basiselement und ein dem Kopf zugewandtes flexibles Kopfanlageelement aufweist, wobei der wenigstens eine Sensor zwischen dem Basiselement und dem flexiblen Kopfanlageelement angeordnet ist.

Gemäß einer weiteren bevorzugten Ausführungsform ist vorgesehen, dass die Kopfstütze eine Mehrzahl von Sensoren aufweist, welche vorzugsweise auf einer dem Kopfanlageelement zugewandten Frontfläche des Basiselements angeordnet sind. Denkbar ist, dass die Sensoren über die Frontfläche verteilt angeordnet sind und derjenige Sensor anschlägt, an welchem der Kontaktpunkt detektiert wird, so dass die Position des angeschlagenen Sensors für die Position des Kontaktpunktes steht. Auf diese Weise ist eine vergleichsweise einfache und kostengünstig zu implementierende Lokalisierungsfunktionalität zur Bestimmung der Relativposition zwischen dem Kopf und der Kopfstütze realisierbar. Erfindungsgemäss ist vorgesehen, dass die Sensoren optische Sensoren umfassen. Hierbei umfasst jeder Sensor eine Lichtquelle, beispielsweise eine Leuchtdiode (LED), welche auf einer Randseite des Basiselements angeordnet ist, und einen Lichtdetektor, beispielsweise eine Fotodiode, welcher auf einer gegenüberliegenden Randseite des Basiselements angeordnet ist, so dass der Lichtdetektor das Licht der Lichtquelle detektiert, wenn der Lichtstrahl nicht unterbrochen ist. Denkbar ist, dass bei einem durch den Kopf des Insassen auf die Kopfstütze wirkenden Druck das flexible Kopfanlageelement derart in Richtung des Basiselements gedrückt wird, dass im Bereich des Kontaktpunkts der Lichtstrahl zwischen der Lichtquelle und dem Lichtdetektor durch das eingedrückte Kopfanlageelement unterbrochen wird. Die Sensoren sind vorzugsweise derart angeordnet, dass die verschiedenen Lichtstrahlen zueinander parallel und im Wesentlichen waagerecht verlaufen. Wenn einer der Lichtstrahlen unterbrochen wird, ist somit ein Rückschluss auf die Höhe der Kopfstütze relativ zum Kontaktpunkt bzw. zum Kopf des Insassen möglich.

Gemäß einer weiteren bevorzugten Ausführungsform ist vorgesehen, dass nur eine einzige Lichtquelle, beispielsweise eine Leuchtdiode, vorgesehen ist, dessen Licht durch Lichtverteiler auf verschiedenen Nuten verteilt wird.

Gemäß einer weiteren bevorzugten Ausführungsform ist vorgesehen, dass auf einer dem Basiselement zugewandten Rückseite des Kopfanlageelements Nuten im Kopfanlageelement ausgebildet sind, wobei in jeder Nut jeweils eine Lichtquelle und ein Lichtdetektor angeordnet sind. Das Kopfanlageelement ist vorzugsweise derart ausgebildet, dass wenn eine Kraft durch einen Kopf auf das Kopfanlageelement ausgeübt wird, die entsprechende auf der Höhe der Kontaktstelle befindliche Nut zusammengedrückt wird und der in dieser Nut befindliche Lichtdetektor somit kein Licht mehr von der ebenfalls in dieser Nut befindlichen Lichtquelle empfangen kann. Auf diese Weise kann die Höhe der Kontaktstelle relativ zur Kopfstütze bestimmt werden. Denkbar wäre auch, dass die Sensoren zusätzlich Drucksensoren umfassen, wobei derjenige Sensor anschlägt, an welchem der höchste mechanische Druck, infolge des anliegenden Kopfes, detektiert wird. Alternativ wäre auch denkbar, dass einfache Kontaktsensoren, beispielsweise nach Art eines Druckschalters, zusätzlich Verwendung finden, wobei derjenige Sensor einen Stromkreis schließt oder öffnet, welcher durch den anliegenden Kopf mit einer Kraft beaufschlagt wird.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Schnittbildansicht einer Kopfstütze gemäß einer beispielhaften Ausführungsform der vorliegenden Erfindung ohne äußere Krafteinwirkung durch den Kopf eines Insassen.
- **Figur 2**: zeigt eine schematische Schnittbildansicht der Kopfstütze gemäß der beispielhaften Ausführungsform der vorliegenden Erfindung mit äußerer Krafteinwirkung durch den Kopf eines Insassen.
- **Figur 3**: zeigt eine schematische Perspektivansicht einer Kopfstütze gemäß einer beispielhaften Ausführungsform der vorliegenden Erfindung ohne äußere Krafteinwirkung durch den Kopf eines Insassen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

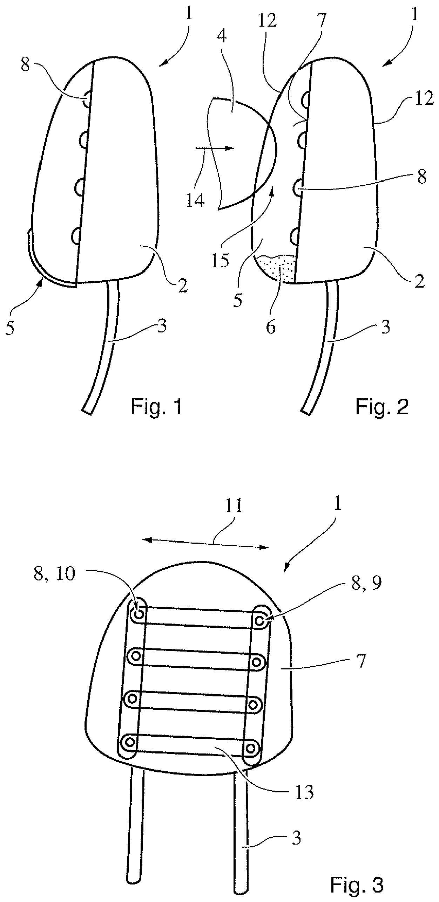

In **Figuren 1, 2 und 3** sind schematische Ansichten einer Kopfstütze 1 gemäß einer beispielhaften Ausführungsform der vorliegenden Erfindung dargestellt.

Die Kopfstütze 1 umfasst ein Basiselement 2, welches mittels zweier Haltestangen 3 an einer Rückenlehne eines Fahrzeugsitzes (nicht abgebildet) befestigt ist. Denkbar ist, dass die Haltestangen 3 höhenverstellbar in Führungshülsen der Rückenlehne angeordnet sind oder dass das Basiselement 2 höhenverstellbar an den Haltestangen 3 befestigt ist. An einer dem Kopf 4 eines Insassen zugewandten Seite weist die Kopfstütze 1 ein Kopfanlageelement 5 auf. Das Kopfanlageelement 5 weist ein insbesondere flexibles Polstermaterial 6 auf, welches bei einem Kontakt mit dem Kopf 4 (siehe Figur 2) elastisch in Richtung des Basiselements 2 eindrückbar ist. Das Basiselement 2 und das Kopfanlageelement 4 sind vorzugsweise jeweils mit einem Bezug 12 bezogen.

Das Basiselement 2 weist eine dem Kopfanlageelement 5 zugewandte Frontfläche 7 auf, auf welcher eine Mehrzahl von Sensoren 8 angeordnet ist. Jeder Sensor 8 umfasst eine Leuchtdiode 9 und eine Fotodiode 10, wobei auf der Frontfläche 7 jeweils immer eine Leuchtdiode 9 und eine Fotodiode 10 entlang einer horizontalen Richtung 11 einander gegenüberliegend angeordnet sind. Auf einer dem Basiselement 2 zugewandten Rückseite des Kopfanlageelements 5 weist das Kopfanlageelement 5 Nuten 13 auf, durch welche das Licht einer Leuchtdiode 9 parallel zur horizontalen Richtung 11 auf eine Fotodiode 10 trifft, sofern auf das Kopfanlageelement 5 keine von einem Kopf 4 des Insassen ausgehende Kraft 14 in Richtung des Basiselements 2 ausgeübt wird. Wenn eine solche Kraft 14 auf das Kopfanlageelement 5 ausgeübt wird (siehe Figur 2), wird das Kopfanlageelement 5 auf der Höhe des Kontaktbereichs 15 zwischen dem Kopf 4 und dem Kopfanlageelement 5 in Richtung des Basiselements 2 gedrückt. Hierdurch wird die auf der Höhe des Kontaktbereichs 15 befindliche Nut 13 zusammengedrückt, so dass das Licht der in der Nut 13 befindlichen Leuchtdiode 9 nicht mehr zu der ebenfalls in dieser Nut 13 befindlichen korrespondierenden Fotodiode 10 gelangen kann. Eine Auswerteeinheit wertet die Signale der Fotodioden 10 stetig aus, so dass ein Ausbleiben des Lichtkegels im Bereich dieser einen Fotodiode 10 detektiert wird. Anhand der bekannten Position dieser Fotodiode 10 wird anschließend auf die Höhe des Kontaktbereichs 15 rückgeschlossen und somit die Relativposition zwischen dem Kopf 4 und der Kopfstütze 1 bestimmt.

Diese Information wird vorzugsweise mit Referenzdaten verglichen, um zu bestimmen, ob sich die Kopfstütze 1 in einer korrekten Position befindet oder ob die Position der Kopfstütze 1 hinsichtlich der Position des Kopfes 4 optimiert werden sollte. Wenn eine verbesserungswürdige Position der Kopfstütze 1 detektiert wird, wird ein Warnhinweis zur Benachrichtigung des Insassen erzeugt, damit der Insasse die Position der Kopfstütze 1 manuell optimieren kann, und/oder die Kopfstütze 1 wird mittels eines Höhenverstellmotors automatisch in die richtige Position verfahren. Denkbar ist auch, dass beim manuellen Verstellen der Kopfstützenhöhe die Position überwacht wird und ein Signalton ausgegeben wird, wenn die korrekte Position erreicht ist.

Denkbar ist auch, dass auf der einen Seite nur eine einzige Lichtquelle 9, beispielsweise Leuchtdiode, angeordnet ist, dessen Licht durch Lichtverteiler auf die verschiedenen Nuten 13 verteilt wird.

### BEZUGSZEICHENLISTE

- 1: Kopfstütze
- 2: Basiselement
- 3: Haltestange
- 4: Kopf
- 5: Kopfanlageelement
- 6: Polstermaterial
- 7: Frontfläche
- 8: Sensor
- 9: Leuchtdiode
- 10: Fotodiode
- 11: horizontale Richtung
- 12: Bezug
- 13: Nut
- 14: Kraft
- 15: Kontaktbereich

## Patentansprüche

1. Kopfstütze (1) für einen Fahrzeugsitz, welche wenigstens einen Sensor (8, 9, 10) aufweist, welcher zur Bestimmung der Relativposition der Kopfstütze (1) relativ zu einem Kopf (4) eines auf dem Fahrzeugsitz sitzenden Insassen bestimmt ist, wobei der wenigstens eine Sensor (8, 9, 10) einen optischen Sensor (8, 9, 10) umfasst, **dadurch gekennzeichnet, dass** die Kopfstütze (1) ein Basiselement (2) und ein dem Kopf (4) zugewandtes flexibles Kopfanlageelement (5) aufweist, wobei der wenigstens eine Sensor (8, 9, 10) zwischen dem Basiselement (2) und dem flexiblen Kopfanlageelement (5) angeordnet ist, wobei der optische Sensor (8, 9, 10) jeweils Teil einer Lichtschranke ist und wobei der optische Sensor (8, 9, 10) jeweils eine Lichtquelle und einen Lichtdetektor umfasst, welche derart angeordnet sind, dass ein von der Lichtquelle ausgehender Lichtstrahl auf den Lichtdetektor trifft, wenn kein Druck durch den Kopf (4) des Insassen auf das Kopfanlageelement (5) ausgeübt wird, und dass der Lichtstrahl unterbrochen wird, wenn Druck durch den Kopf (4) des Insassen auf das Kopfanlageelement (5) ausgeübt wird.

2. Kopfstütze (1) e nach Anspruch 1, wobei die Kopfstütze (1) eine Mehrzahl von Sensoren (8, 9, 10) aufweist, welche auf einer dem Kopfanlageelement (5) zugewandten Frontfläche (7) des Basiselements (2) angeordnet sind.

3. Kopfstütze (1) nach Anspruch 1 oder 2, wobei die Lichtquelle eine Leuchtdiode (9) umfasst, welche auf einer Randseite des Basiselements (2) angeordnet ist, und wobei der Lichtdetektor eine Fotodiode (10) umfasst, welche auf einer gegenüberliegenden Randseite des Basiselements (2) angeordnet ist.

4. Kopfstütze (1) nach einem der vorhergehenden Ansprüche, wobei die Mehrzahl der Sensoren (8, 9, 10) derart angeordnet ist, dass die jeweiligen Lichtstrahlen zueinander parallel und im Wesentlichen waagerecht verlaufen.

5. Kopfstütze (1) nach einem der vorhergehenden Ansprüche, wobei auf einer dem Basiselement (2) zugewandten Rückseite des Kopfanlageelements (5) Nuten (13) im Kopfanlageelement (5) ausgebildet sind, wobei in jeder Nut (13) jeweils eine Lichtquelle und ein Lichtdetektor angeordnet sind.

6. Kopfstütze (1) nach einem der vorhergehenden Ansprüche, wobei das Kopfanlageelement (5) derart ausgebildet ist, dass wenn Druck durch einen Kopf (4) des Insassen auf das Kopfanlageelement (5) ausgeübt wird, die entsprechende auf der Höhe der Kontaktstelle (15) befindliche Nut (13) zusammengedrückt wird und der in dieser Nut (13) verlaufende Lichtstrahl unterbrochen wird.

7. Fahrzeugsitz aufweisend ein Sitzteil, eine Rückenlehne und eine Kopfstütze (1) nach einem der vorhergehenden Ansprüche.

## Claims

1. Head restraint (1) for a vehicle seat, which head restraint has at least one sensor (8, 9, 10) which is intended to determine the relative position of the head restraint (1) in relation to a head (4) of a vehicle occupant sitting on the vehicle seat, wherein the at least one sensor (8, 9, 10) comprises an optical sensor (8, 9, 10), **characterized in that** the head restraint (1) has a base element (2) and a flexible head restraint element (5) assigned to the head (4), wherein the at least one sensor (8, 9, 10) is arranged between the base element (2) and the flexible head restraint element (5), wherein the optical sensor (8, 9, 10) is in each case part of a photoelectric barrier and wherein the optical sensor (8, 9, 10) comprises in each case a light source and a light detector, which are arranged in such a way that a light beam emerging from the light source is incident on the light detector if no pressure is applied to the head restraint element (5) by the vehicle occupant's head (4), and **in that** the light beam is interrupted if pressure is applied to the head restraint element (5) by the vehicle occupant's head (4).

2. Head restraint (1) e according to Claim 1, wherein the head restraint (1) has a multiplicity of sensors (8, 9, 10) which are arranged on a front face (7) of the base element (2) facing the head restraint element (5).

3. Head restraint (1) according to Claim 1 or 2, wherein the light source comprises a light emitting diode (9) which is arranged on an edge side of the base element (2), and wherein the light detector comprises a photodiode (10) which is arranged on an opposite edge side of the base element (2).

4. Head restraint (1) according to any one of the preceding claims, wherein the multiplicity of sensors (8, 9, 10) are arranged in such a way that the respective light beams run parallel with respect to one another and substantially horizontally.

5. Head restraint (1) according to any one of the preceding claims, wherein grooves (13) are formed in the head restraint element (5) on a rear side of the head restraint element (5) facing the base element (2), wherein in each case a light source and a light detector are arranged in each groove (13) .

6. Head restraint (1) according to any one of the preceding claims, wherein the head restraint element (5) is embodied in such a way that when pressure is applied to the head restraint element (5) by a vehicle occupant's head (4), the corresponding groove (13) located at the height of the contact point (15) is compressed, and the light beam running in this groove (13) is interrupted.

7. Vehicle seat having a seat part, a backrest and a head restraint (1) according to any one of the preceding claims.

## Revendications

1. Appuie-tête (1) pour un siège de véhicule, lequel présente au moins un capteur (8, 9, 10) destiné à déterminer la position relative de l'appuie-tête (1) par rapport à une tête (4) d'un occupant assis sur le siège de véhicule, dans lequel l'au moins un capteur (8, 9, 10) comprend un capteur optique (8, 9, 10), **caractérisé en ce que** l'appuie-tête (1) présente un élément de base (2) et un élément repose-tête flexible (5) tourné vers la tête (4), dans lequel l'au moins un capteur (8, 9, 10) est disposé entre l'élément de base (2) et l'élément repose-tête flexible (5), dans lequel le capteur optique (8, 9, 10) est respectivement une partie d'une barrière photoélectrique et dans lequel le capteur optique (8, 9, 10) comprend respectivement une source lumineuse et un détecteur de lumière qui sont disposés de manière à ce qu'un rayon lumineux partant de la source lumineuse touche le détecteur de lumière lorsqu'aucune pression n'est exercée par la tête (4) de l'occupant sur l'élément repose-tête (5), et que le rayon lumineux est interrompu lorsqu'une pression est exercée par la tête (4) de l'occupant sur l'élément repose-tête (5).

2. Appuie-tête (1) selon la revendication 1, dans lequel l'appuie-tête (1) présente une pluralité de capteurs (8, 9, 10) qui sont disposés sur une surface frontale (7), tournée vers l'élément repose-tête (5), de l'élément de base (2).

3. Appuie-tête (1) selon la revendication 1 ou 2, dans lequel la source lumineuse comprend une diode lumineuse (9) disposée sur un côté de bord de l'élément de base (2), et dans lequel le détecteur de lumière comprend une photodiode (10) disposée sur un côté de bord situé en vis-à-vis de l'élément de base (2).

4. Appuie-tête (1) selon l'une des revendications précédentes, dans lequel la majorité des capteurs (8, 9, 10) sont disposés de manière à ce que les rayons lumineux respectifs se propagent parallèlement entre eux et sensiblement horizontalement.

5. Appuie-tête (1) selon l'une des revendications précédentes, dans lequel, sur un côté arrière tourné vers l'élément de base (2) de l'élément repose-tête (5), des rainures (13) sont formées dans l'élément repose-tête (5), dans lequel respectivement une source lumineuse et un détecteur de lumière sont disposés dans chaque rainure (13).

6. Appuie-tête (1) selon l'une des revendications précédentes, dans lequel l'élément repose-tête (5) est réalisé de manière à ce qu'en cas d'une pression exercée par une tête (4) de l'occupant sur l'élément repose-tête (5), la rainure (13) correspondante se trouvant à la hauteur de l'emplacement de contact (15) est comprimée et le rayon lumineux se propageant dans cette rainure (13) est interrompu.

7. Siège de véhicule présentant une partie d'assise, un dossier, et un appuie-tête (1) selon l'une des revendications précédentes.
